# EUROPEAN PATENT SPECIFICATION

(11) **EP 2 068 179 B1**
(45) Date of publication and mention of the grant of the patent: **01.06.2011**
(21) Application number: 08445029.5
(22) Date of filing: 23.09.2008
(51) Int. Cl.: G02B 6/00, F21S 8/00

(54) **Display lamp device**
Anzeigelampenvorrichtung
Dispositif de lampe d'affichage

(30) Priority: 06.12.2007 SE 0702749; 13.02.2008 GB 0802632
(43) Date of publication of application: 10.06.2009
(73) Proprietor: Levon, Leif, 138 30 Älta (SE)
(72) Inventor: Levon, Leif, 138 30 Älta (SE)

(56) References cited:
- EP-A- 1 429 395
- DE-U1- 8 522 635
- US-A1- 2003 174 500
- US-A1- 2005 265 044

## Description

### Example:

Display lamp to enable effective illumination of decorative glass and crystal ornaments.

### Background:

Present display units use a small number of light sources to illuminate a limited area on which ornaments rest and are exhibited upon. Light is projected from underneath or along one of the ornaments sides in order to accomplish internal reflection of the item to be observed. In order to achieve this diodes have been placed as close to the object as possible. For esthetic reasons the size of the illuminated space provided for the ornament to rest upon should not exceed that of its base measurement, because any rays striking the object externally will cause unfavourable reflections. This restriction limits the amount of luminaires able to congregate within this confined space.

Thus, displayed ornamental pieces are not optimally illuminated because of this physical constructional limitation. The luminous sources proximity to the displayed object also tend to cause direct glare from incandescent light filaments or diodes.

### Statement of invention

To overcome this, the present invention proposes a light collecting and distribution guide system, able to provide an increased number of direct light beams and indirect light rays emanating from a multitude of light sources to this limited display area.
D1: US 2005/265044 A1
   Demonstrates the use of a light gathering module to mix light in order to achieve planar light in conjunction with an optical conditioning component such as a diffuser, especially intended for liquid crystal display panels, and deliver uniform distribution of light.
D2: EP-A-1 429 395
   Relates to a fixed solid state light sources especially those mimicing incandescent bulbs. A light pipe delivers light to a radiator in order to act as a automotive light bulb.
D3: DE 85 22 635 U1
   Shows a stationary interconnected light directing lamp with variable divergent sections.
D4**:** US 2003/174500 A1
   Depicts a translucent tube shaped shade intended to spread a directional light flux.

The above prior art demonstrates the use of light guiding technology in order to derive a secondary light source from a distant primary light source. Collimated as well as convergent and divergent rays are employed to achieve various specific purposes.

### Advantages

The use of more light sources will enhance the decorative effect of the ornaments on display. Light intensity and direction will be easier to adjust, as well as chromatic effects.

Since all light sources are concealed some distance from the display area/zone and distal to the omamnet on display, direct glare, derived from the intense arc created between the cathode and anode of light diodes, is eliminated. Various lenses may be added to the display aperture in order to attain refraction modifications and direction.

The system takes advantage of collimated light as well as convergent and divergent rays, and effectively illuminates a vast assortment of materials composed of light conducting material, for example, glass, crystals, acrylics, plastics,gem stones amber,quartz,and other transluscent materials and liquids.

The system also enables a vast selection of modifications , combinations and operating modes.

For example two systems may be combined to work in concert, and the device can be tailor made to fit a particular ornament.

The invention will now be described by comparison by referring to the following accompanying drawings:
Fig.1 shows a crystal ornament displayed on a regular display device illuminated by a limited number of light sources.
Fig.2 shows a light guide display device according to the invention.

### Detailed description

A display device comprised of an internally reflecting predominantly tapering light guide system.

Light rays are introduced into larger aperture 8 and convejed toward the tapering end or to some point along its course.

Light is collected inside a container having internally reflecting walls or surfaces 2 acting as a light guide system. Adjacent and/or opposite reflective surfaces reflect light towards openings or apertures 4 along its course from base to apex/vortex.

These apertures are provided with decorative objects 5 to be displayed. Displayed objects should possess light conducting , emitting and/or reflective proporties, so as to enhance the decorative visual effect.

The objects may be massive or partially massive, transluscent, partly opaque, phosphorescent, glass, crystals, quartz, gemstones, ornaments, holographs,jewels,laser carved motifs / figurins or reflectors or parts there of, and/or filled with gas or liquid.

The light guide itself can be concealed from view when housed within other objects, such as a box, lantern, pyramid ,statue or other item.

For example the cap stone at the tip/apex/vortex of a pyramid may be fitted with a smaller pyramid made of light conducting/emitting material, having engraved art work or carved sculptures.

The length of the light guide elevates objects to be displayed to an appealing height when visualized by an observer, and its broader base accommodates the use of a wider range of illumination devices providing ample variations regarding light colour scheme regulation as well as light intensity alterations delivered to displayed items. Reflective surfaces may be plane,convex,concave,irregular,holographic or Fresnell and be made of suitable reflective material. The reflective wall material may extend exteriorly to envelope part of the ornamental piece or into the ornament itself to achieve additional reflecting qualitative effects.

Apertures may be fitted with various lenses,reflectors and prisms to achieve a variety of visual effects, when projecting light onto other objects or on behalf of their own appearance.

All types of light rays may be used to accomplish interesting displays. For example U.V,ultraviolet rays may fluoresce special material embedded in an object made of translucent material or a laser light beam will scatter its light when directed toward a prism.

Light guides may be made cavernous or filled with transparent solids or liquids.

Buoyant light guides ,for example, in the shape of pyramids or cones, may act as Cartesian divers that ascend and descend in a liquid when, the vessel containing them, is subjected to pressure changes , temperature fluctuations or influenced by current forces.

Here illumination sources may appear from above and/or below.

For example light appearing from above will strike the light guides reflective surfaces on their way down, and beams of light from below will shine on them on their way up.

Hence whether they rise or fall they will be adequately illuminated. Horizontal,vertical or oblique furrows or slits made along the exterior of the reflective surface and partly penetrating the interior, may be fitted with light conducting fins,plates or other fibre optic materials.

Irregular openings may be made in order to display illuminated text or figures.

Indentations may be made along the reflective surfaces of the walls, assisting rays of light to converge toward light conducting protruberances constructed along its course,giving it a glittering studded appearance.

Light guide walls made of two way mirror material, enclosing a similarly shaped object having reflective surfaces, will create multidimentional light images, appearing infinite to the viewer.

Another variation uses parabolic/concave mirrors facing one another, enveloping one or more light sources in the middle, and gaps along their circumference are provided with light conducting/emitting material. Similar light guide systems can operate in the inverted position, utilizing sun light or luminaires mounted in the ceiling or on the roof.

The invention will now be described by referring to the accompanying drawings:

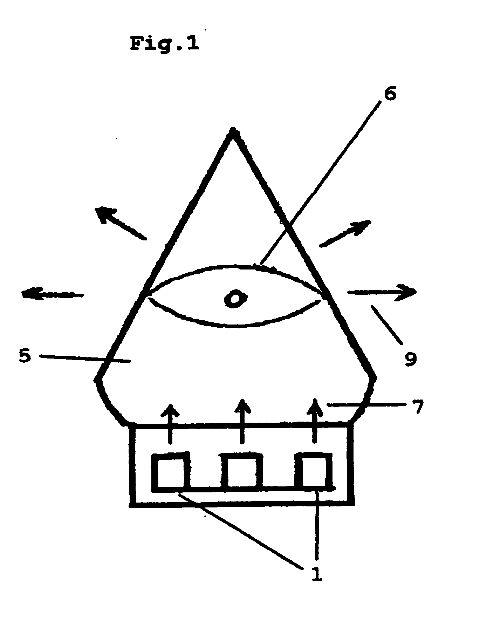

- Figure 1 shows a common display device used to illuminate crystal glass omamnets using a few diodes.

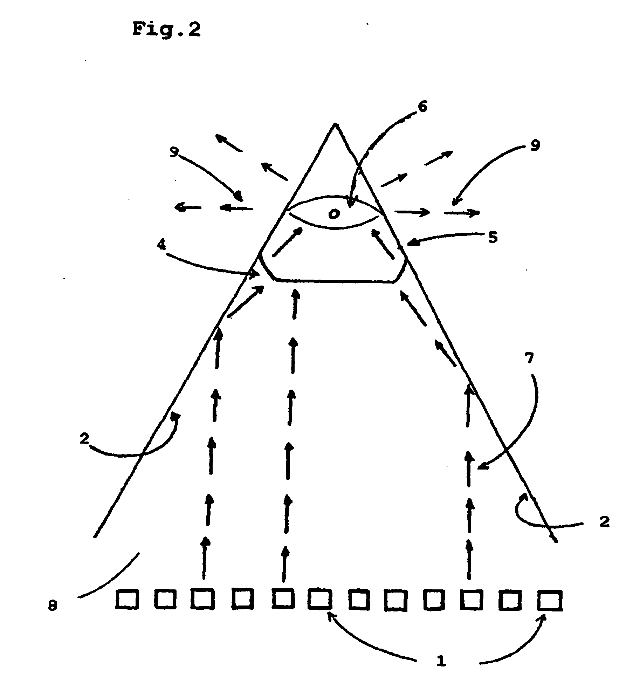

- Figure 2 shows a display device according to the invention housing multiple light sources.

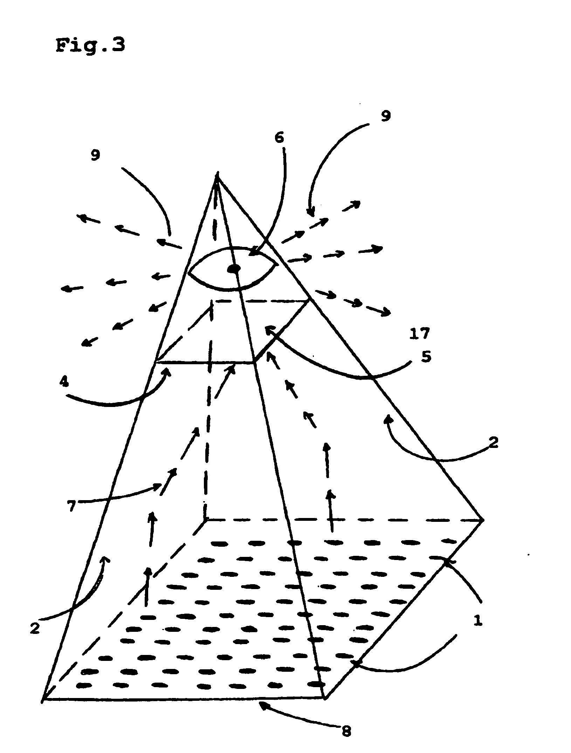

- Figure 3 illustrates a schematic perspective view of a display lamp in the the shape of a pyramid, where the cap stone tip has been replaced by a smaller ornamental piece having light conducting and emitting properties.

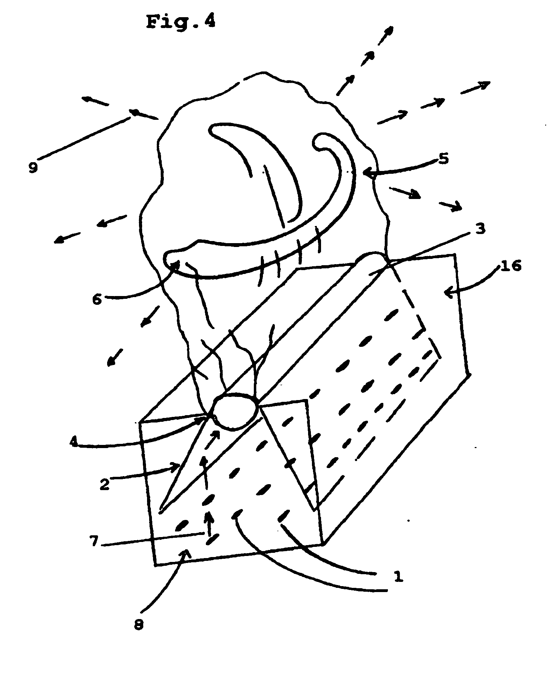

- Figure 4 depicts a schematic view of an ornamental diplay unit having elongated reflective surfaces facing one another resembling an A-frame.

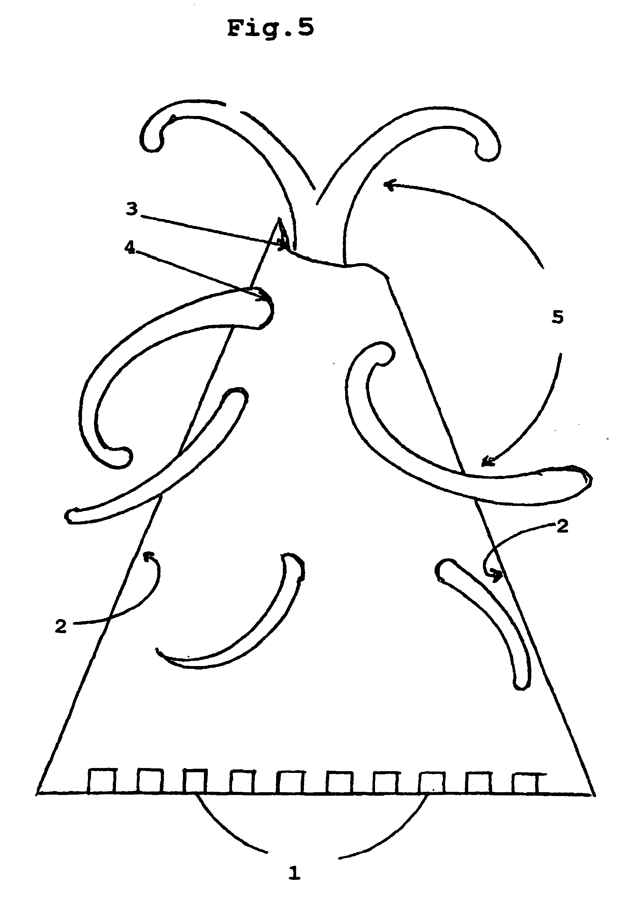

- Figure 5 shows a cone shaped display unit made to resemble an ornamental erupting volcano with spouting lava/magma made from light transmitting and emitting material.

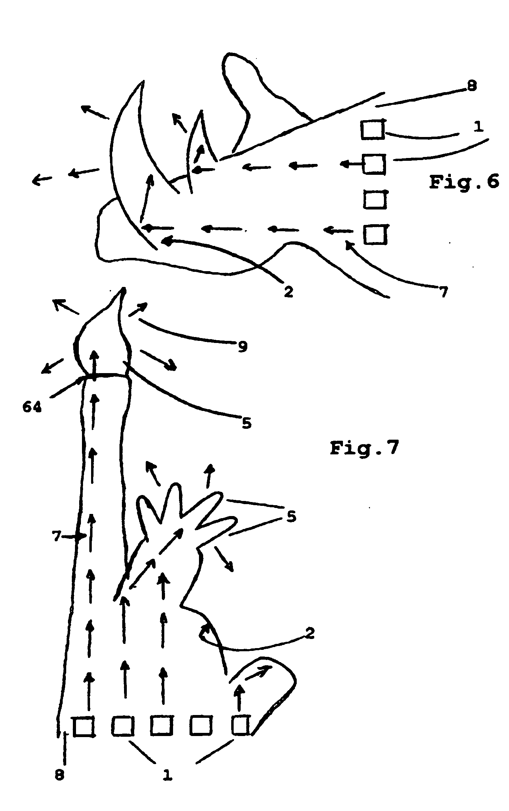

- Figure 6 shows a side view of a display device illuminating rhinoceros horns.
- Figure 7 shows how to illuminate parts of a statue using the light guide system, for example spiked rays of a Nimbus/halo,tourch flames and stone tablet.

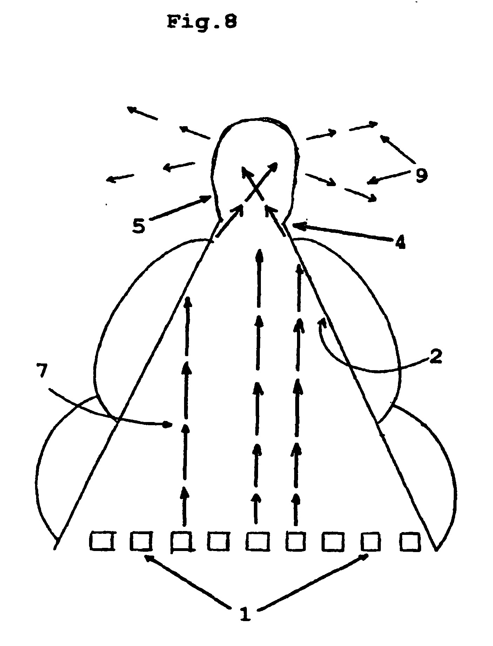

- Figure 8 shows the use of the display device to illuminate a head.

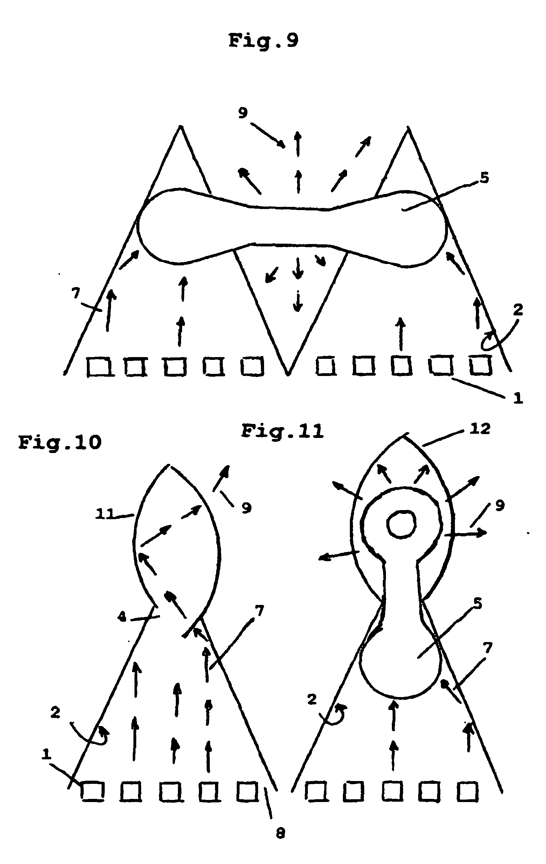

- Figure 9 shows the combined use of two or more light guides acting together to illuminate a structure.
- Figure 10 shows a side view of a light emitting ornament composed of a reflector reflecting light onto a prismatic lens.
- Figure 11 shows a side view of a bulbous structure having a spherical or tuberous base placed in a light guide aperture with a sprouting portion extending into a reflector ornament resembling Figure 10.

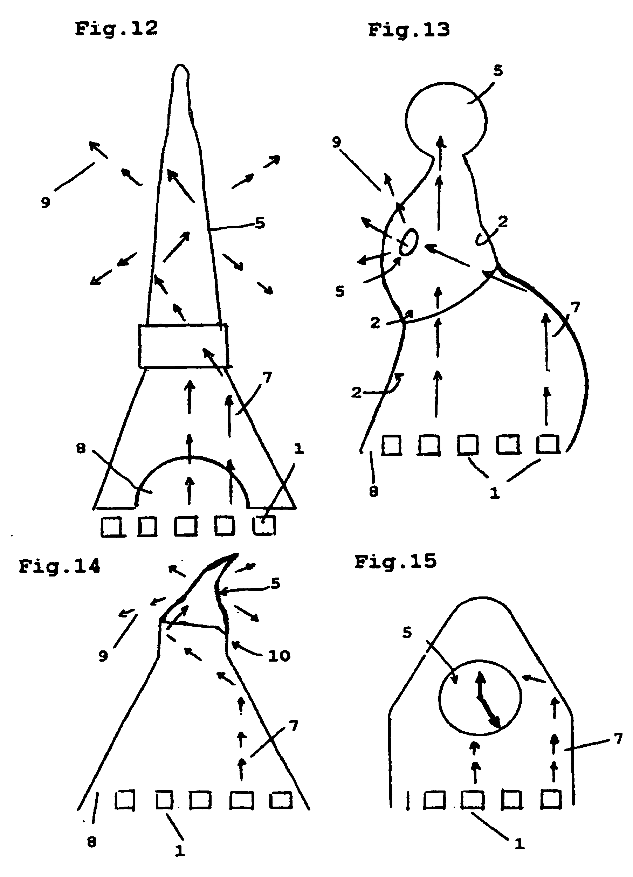

- Figure 12 illustrates a light guide system in the form of an obelisk or monument.
- Figure 13 shows a side view of an animal casting having areas illuminated using a light guide system.
- Figure 14 shows a side view of a funnel shaped light guide fitted with a light emitting wick resembling a candle light.
- Figure 15 shows a frontal view of an illuminated clock face.

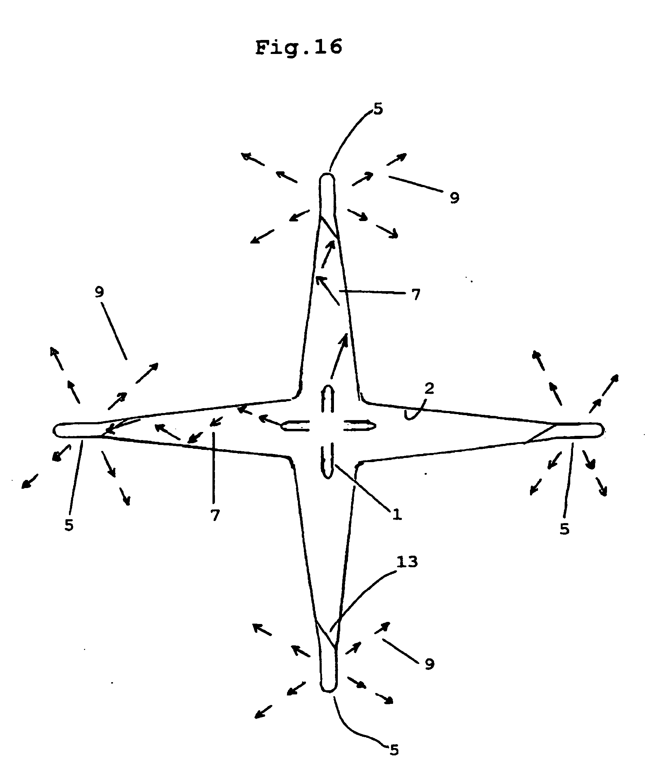

- Figure 16 shows a side view of several light guides arranged in star formation.

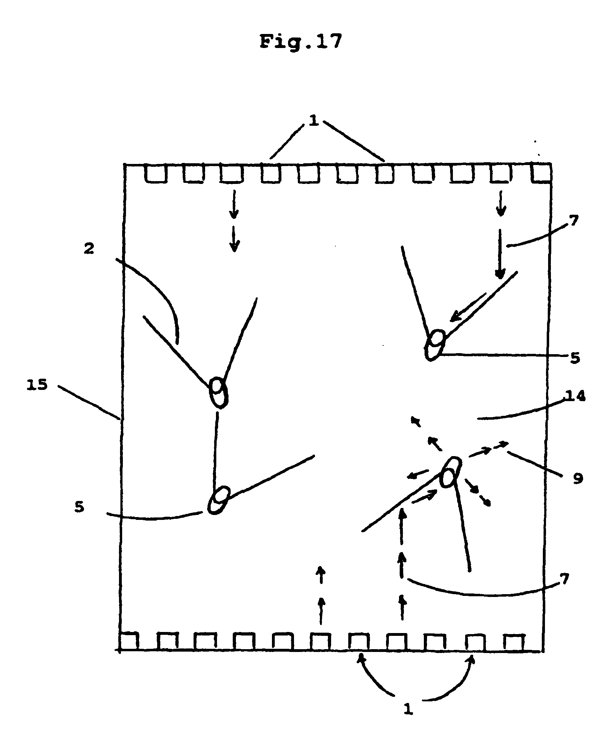

- Figure 17 shows a side view of light guides immersed in a liquid and capable of locomotion due to pressure changes, heat fluctuations or currents.

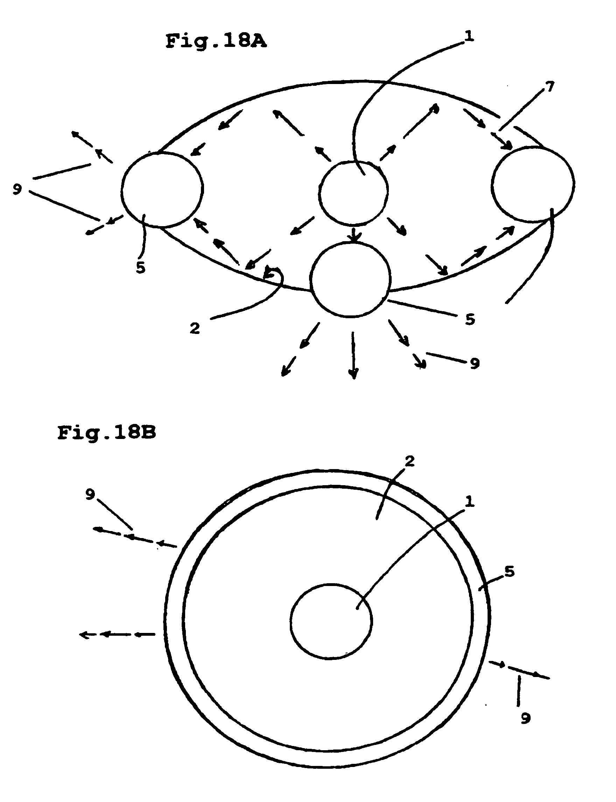

- Figure 18a shows a cross-section of parabolic/concave reflective surfaces, distributing light throughout its structure.
- Figure 18b shows Figure 18a as seen from above.

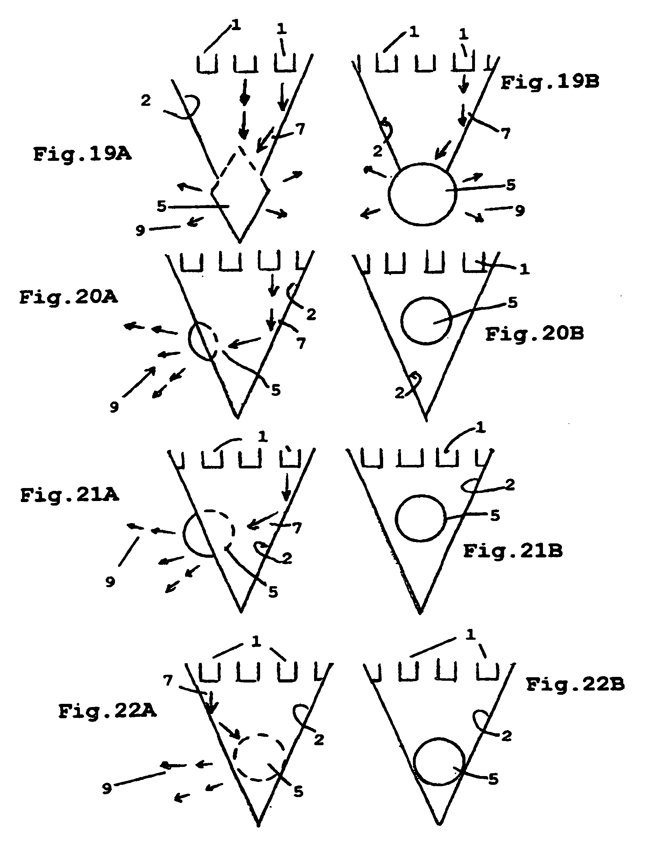

- Figures 19a and 19b show cross sections of display lamps fitted with prisms and spherical lenses respectively.
- Figures 20a is a side view and figure 20b a front view of a lamp displaying an oval lens along one of its walls.
- Figures 21 a is a side view and figure 21b a front view of a device displaying a spherical lens.
- Figure 22a is a side view and figure 22b a front view showing a spherical lens lodged in a corner region..

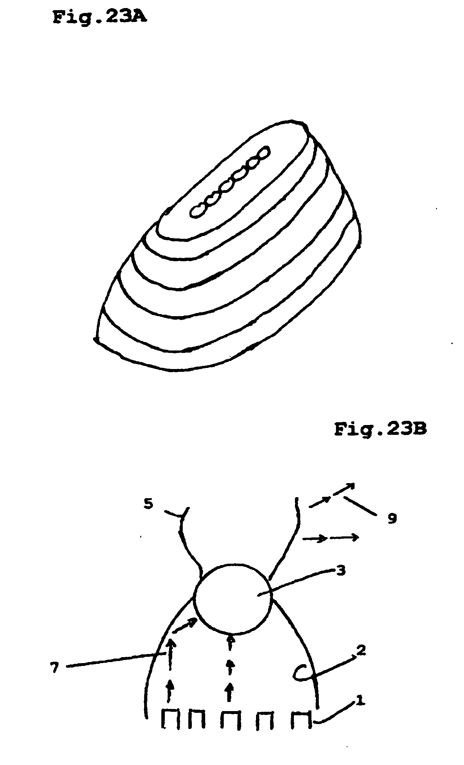

- Figure 23a illustrates a display lamp having conical/ellipsoidal/ parabaloid/hyperboloid features or parts there of with lenses mounted in the window display area.
- Figure 23b depicts figure 23a in cross section.

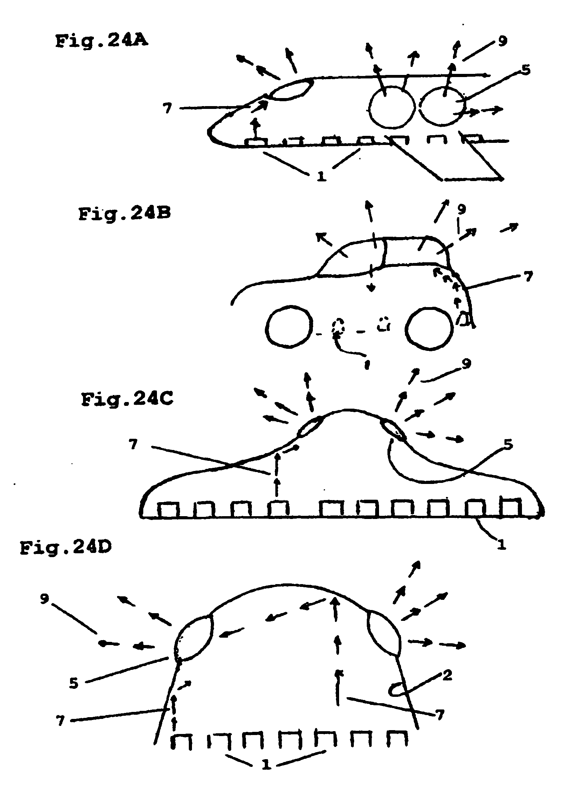

- Figure 24a,24b and 24c show the display device in the shape of vehicles.
- Figure 24d shows a cross section of figures 24a,24b and 24c.

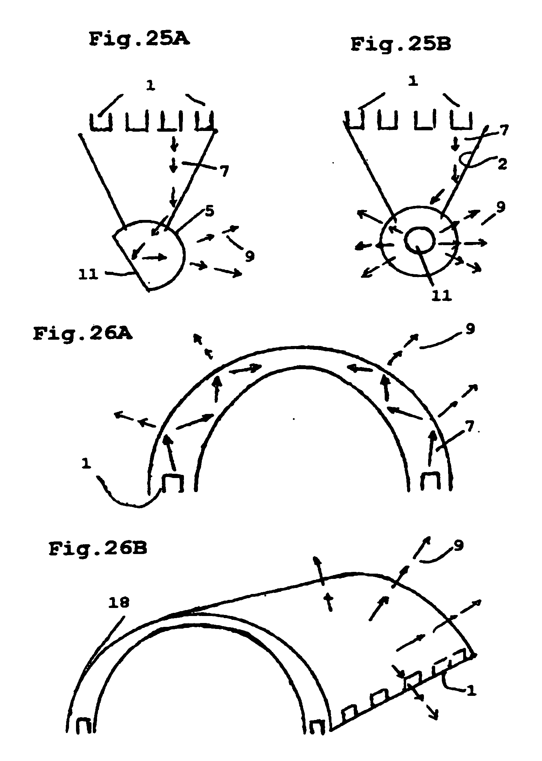

- Figures 25a and 25b illustrate ornamental reflectors.
- Figure 26a shows a cross sectional view and figure 26b a schematic view of a display device having walls made of two way mirror material housing a reflective structure of predominantly similar shape.

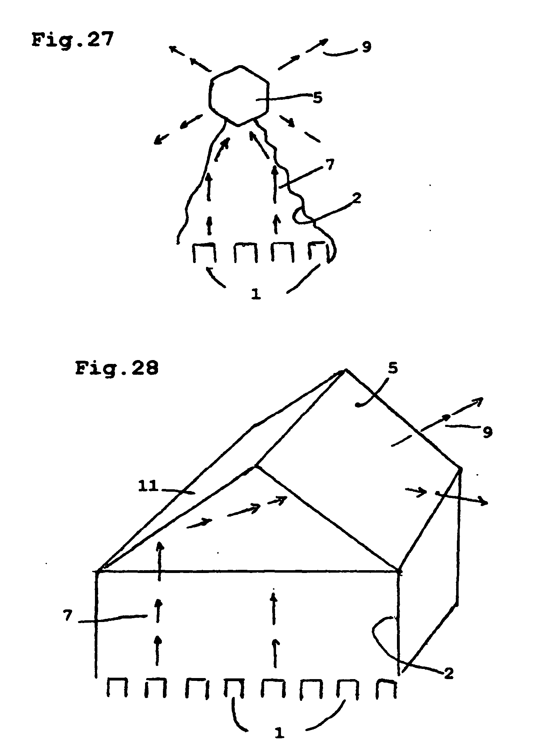

- Figure 27 shows an example of irregular reflective surfaces.
- Figure 28 shows a roof structure made of crushed reflecting material having one or more sides of silver material extending from the interior of the light guide wall acting as additional reflectors onto the light emitting roof coating.

Figure 1 shows a simple display device transmitting rays 7 emanating from a few light diodes 1, onto a light conducting ornamental piece 5 decorated with an engraved motif 6. Mainly collimated light enters the object to be displayed due to the proximity of the light diodes, and only some visible light rays 9 reach the observer.

Figure 2 shows a display lamp according to the invention. Several light sources 1 are positioned in or near aperture 8, and their light rays 7 are collected and reflected onto adjacent and/or opposing interior walls 2, travelling toward aperture 4, in order to transcend into exhibited ornament 5, enabling light rays 9 to be emitted from engraving 6. The light guide provides the use of collimated,divergent and convergent light rays.

Fig 3 show a schematic view of a display lamp having several light sources 1 in or near base aperture 8. Light rays 7 are internally reflected by means of the mirror like internal walls 2, and are concentrated toward aperture 4, where a cap stone pyramid 5 of light conducting and transmitting material is lodged. Light rays 9 are further emitted from the mounted cap stone apex/vortex including its engraving 6. A corner section of the light guides walls projects up and into the ornament acting as a supplementary reflector 17.

Fig 4 shows an elongated/oblong cone/ellipsoid/paraboloid or A-frame shaped display lamp with reflective sloping wall surfaces extending from a large base aperture converging toward a smaller elongated apical aperture, housed within an attractive box 16.

Light derived from light sources 1 are internally reflected between sides 7 to reach display area aperture 4, in order to illuminate display object 5 and engraving 6 directly, or via a suitable lens 3, positioned in the smaller narrower aperture 4 and observers will notice an effective light display 9 issuing from the item on display.

Fig 5 shows a conical display lamp arranged to resemble an erupting volcano. Ejections in the form of light conducting and emitting material 5, have been fitted into apertures made along the course of the structure as well as extending from the vortex aperture area.

Walls 2 internally reflect light from diodes 1, to reach all apertures pierced by lava like material 5.

Figure 6 shows a section through an animal head. Rays of light 7 emitted by light sources 1 are internally reflected to reach light conducting/reflecting horns 5 ,making them appear to glow as rays 5 issue from them.

Figure 7 shows a section of a statue having internal walls 2 coated with a mirror like amalgam ensuring efficient reflection of rays 7 from light diodes 1 to reach apertures fitted with light conducting/reflecting material 5 enabling secondary light 9 to radiate out of its structure.

Fig 8 shows a conical or pyramidal light guide concealed inside an ornament. Light rays 7 appear from diodes 1, and are guided towards a luminous head structure 5 in order to create visible light rays 9.

Fig 9 illustrates the combined use of to or more light guide lamps in conjunction with lenses and light conducting material in order to increase light intensity. Spheroidal lenses are positionend in a corner area, such as in the apical end of a pyramid or cone, and concentrated light is reflected through interconnecting rods projecting through adjoining apertures.

Figure 10 shows how light rays 7 are collected and internally reflected between opposite and/or adjacent internal surfaces and reach external and partially internally mounted reflector surfaces 11 in order to project light through opposing prismatic lens 12 , dispersing light rays 9.

Figure 11 shows a spheroidal lens having a protruding end extending into a reflector with a prismatic face or enveloping prismatic lens.

Figure 12 shows a tapering monumental ornament indirectly illuminated by diodes 1 positioned in or near aperture 8. Light rays 7 are internally reflected to reach light conducting material 5 which in turn will appear to glow 5.

Figure 13 shows how light rays 7 may be reflected from aperture 8 along irregular reflective surfaces 2 to reach apertures along its course such as those housing reflective objects 5 which in turn appear luminous 9.

Figure 14 shows a section through a funnel shaped lightguide connected to a light pipe 10 having light conducting material 5 resembling a flame affixed to its end able to exhibit light 9.

Figure 15 shows a light guide lamp in the shape of an inverted test tube. An aperture having light emitting proporties has been carved into the structure to resemble a time piece.

Figure 16 shows the combined use of several pyramidal or cone shaped light guide units in the form of spines configured to resemble a two or three dimentional star Christmas lamp.

One or more light sources 1 may be positioned near or in their larger apertures. Reflective surfaces have been removed distally and cut obliquely near their tips,raising a portion of the internally reflecting walls, in order to act as additional reflectors 17, brightening up the ornamental display. Light is internally reflected at the ends and finally scattered 9,from semi transparent spines, resembling shinining star rays.

Figure 17 shows several small display lamps immersed in a liquid or gas 14, contained in a receptacle 15, displaying motion due to pressure changes, temperature differences or variations caused by electrical/fluid currents. For example the displayed objects 5 may be made of buoyant material as well as having light emitting properties and simultaneously operate as swim bladders, reacting to environmental differences, such as rising toward the surface when the pressure drops and falling toward the bottom when the pressure increases. If there is a rise in temperature they may ascend and vice versa when reaching cooler areas they start to descend. The ornamental divers shine constantly as they receive light rays 7 from surrounding diodes 1, which are internally reflected between mirror like surfaces 2.

Figure 18a shows a cross sectional side view of parabolic or concave mirror like surfaces 2 facing one another, distributing rays from light source 1 to display objects 5 positioned along their edges and body.

Figure 18b shows a cross sectional view of figure 18a as seen from above.

Figure 19a and 19b illustrates a prismatic lens and a spherical lens 5 respectively set atop a conical or pyramidal light collecting and distributing display lamp.

Each ornament is illuminated directly and indirectly by rays 7 from lights 1, enabling further transfer of light 9.

Figure 20a shows a side view of a cone or pyramid with an ovoid lens ornament 5 placed between one of the reflecting walls 2.

Figure 20b shows a front view of figure 20a.

Figure 21 a and 21 b is similar to figure 20a and 20b, except that the ovoidal body has been replaced by a spheroidal magnifying lens 5.

Figure 22a shows a spherical magnifying lens 5 in a corner position in the tapering end of a pyramid or cone.

Figure 23a shows a variant of figure 4, and exemplifies an ovoid/paraboloid/ellipsoidal/hyperboloid construction, where the reflecting walls are more convex or curved, tapering from a broad aperture base converging toward an oblong narrow display aperture housed by a row of magnifying lenses.

Figures 24a,24b and 24c show examples of hollow structures having internally reflecting walls collecting and distributing light rays to aperture windows having light emitting and spreading properties

Figure 24d shows a generalized cross sectional view of figures 24a-24c, summarizing the internal conduction and distribution of light rays 7 as well as the external spread of light 7 from display windows 5.

Figure 25a shows a reflective surface 11 placed on a section of a adjustable spheroidal lens 5 capable of altering the angle of reflection when tilted in various directions.

Figure 25b shows a spheroidal reflector 11 placed inside an ornamental body 5 able to transmit light rays 9.

Figure 26a shows a cross sectional view of a display lamp having internal and external surfaces constructed of two way mirror material/semi transparent and reflecting 18, housing a reflecting structure of similar but smaller size, in order to permit internal reflection between their spaces of light rays 7 issuing from diodes 1, as well as allowing partial escape of light rays 9 along its course, creating a multi-dimensional optic effect.

Figure 26b shows a generalized overview of figure 26a.

Figure 27 illustrates the use of regular and irregular internal reflective surfaces to illuminate a gem stone or other ornament. Luminaires are housed within cylindrical reflective surfaces which in turn interconnect with uneaven reflective surfaces 2 enabling rays 7 to transcend toward object 5, and ending as rays 9.

Figure 28 shows an example of light sources 1 surrounded by parallel internally reflecting walls 2, bearing a roof like ornamental structure 5 composed of reflecting/transmitting and light emitting material for example crushed glass or plastic, with part of the ceiling covered with a reflector 11, directing rays 9 toward the rest of the roof.

## Claims

1. A display device providing internal illumination of
decorative objects (5), comprising;
an aperture (8) for receiving light rays (7) from a light source (1), a light guide system tapering from said light source (1) toward a distal aperture (4), serving as a limited display area for said object (5), wherein reflective surface walls (2) direct and concentrate collimated, divergent and convergent light rays (7) in order to illuminate said decorative object (5).

2. A display lamp device according to claim 1, **characterized by** internally reflecting converging light guide collecting system (2) to illuminate motifs, figurines, art work and holographs (6),

3. A display lamp device according to claim 1, **characterized by** conical or pyramidal tapering light guides.

4. A display lamp device according to claim 1, **characterized by** oblong or A-frame like converging light guides.

5. A motile display lamp device according to any preceding claims, **characterized by** movement within a liquid medium when subjected to pressure changes, temperature fluctuations or influenced by current forces.

6. A display lamp device according to any preceding claims **characterized by** cavernous or solid light guides.

7. A display lamp device according to any preceding claims, **characterized by** two way reflective surfaces (2).

8. A display lamp device according to any preceding claims, **characterized by** concave mirror surfaces (2) facing one another, enclosing a centrally placed light source, in order to guide light towards converging circumferential apertures (4) housing decorative objects (5).

9. A display lamp device according to any preceding claims, **characterized by** lenses, reflectors and prisms (5) lodged in aperture (4).

10. A display lamp device according to any preceding claims, **characterized by** phosphorescent materials.

11. A display lamp device according to any preceding claims, **characterized in that** ultraviolet rays have the ability to fluoresce embedded material in the decorative objects.

## Patentansprüche

1. Eine Anzeige Gerät entwickelt, um dekorative Elemente bieten (5), mit intärn Beleuchtung **gekennzeichnet durch** eine Öffnung (8), um Licht erhalten Balken (7) aus einer Lichtquelle (1), einem sich verjüngenden Licht führenden Systeme aus dieser Quelle (1) an einer distalen Öffnung (4), die als eine begrenzte Ausstellungsfläche für den Gegenstand (5), **dadurch** reflektierenden Wänden (2) ist und konzentrieren sich parallel, divergenten und konvergenten Lichtstrahlen (7) um beleuchten sagte dekoratives Objekt (5).

2. Eine Anzeige Lampe nach Anspruch 1, **gekennzeichnet durch** intern reflektiert konvergierenden Lichtleiter Kanalisation (2) bis beleuchten Motive, Figuren, Kunstwerke und Hologramme (6),

3. Eine Anzeige Lampe nach Anspruch 1, **gekennzeichnet durch** konischen oder pyramidalen Verjüngung Lichtleitern.

4. Eine Anzeige Lampe nach Anspruch 1, **gekennzeichnet durch** längliche oder Dachform wie konvergierende Lichtleitern.

5. Eine bewegliche Anzeige Lampe Gerät nach einem der vorhergehenden Ansprüche, **gekennzeichnet durch** Bewegung innerhalb eines flüssigen Mediums, wenn sie Druckänderungen, Temperatur ausgesetzt Fluktuationen oder aktuelle Kräfte beeinflusst.

6. Eine Anzeige Lampe Gerät nach einem der vorhergehenden Ansprüche, **gekennzeichnet durch** cavernosus oder feste Lichtleitern.

7. Eine Anzeige Lampe Gerät nach einem der vorhergehenden Ansprüche, **gekennzeichnet durch** zwei Weg reflektierenden Oberflächen (2).

8. Eine Lampe Anzeigevorrichtung nach einem der vorhergehenden Ansprüche, **gekennzeichnet durch** Hohlspiegel Flächen (2) einander zugewandt sind, darunter ein zentral gelegenes Licht Quelle, um die das Licht in Richtung der konvergierenden Öffnungen an seiner Peripherie (4) hinterlegt dekorative Objekte (5).

9. Eine Anzeige Lampe Vorrichtung nach einem der vorhergehenden Ansprüche, **gekennzeichnet durch** Linsen, Reflektoren und Prismen (5) in der Öffnung (4) eingereicht.

10. Eine Anzeige Lampe Gerät nach einem der vorhergehenden Ansprüche, **gekennzeichnet durch** phosphoreszierenden Materialien.

11. Eine Anzeige Lampe Gerät nach einem der vorhergehenden Ansprüche, **gekennzeichnet dadurch, dass** ultraviolettes Licht die Fähigkeit hat eingebettete Materialien in der Dekoration zum Fluoreszieren zu brigen.

## Revendications

1. Un dispositif d'affichage à fournir un éclairage interne de objets de décoration (5), comprenant;
une ouverture (8) pour recevoir les rayons de lumière (7) à partir d'une source de lumière (1), un guide de lumière système source dégressif à partir de ladite lumière (1) vers une ouverture distale (4), siégeant en tant que une zone d'affichage limitée pour cet objet (5), murs de surface dans laquelle réfléchissante (2) direct et de se concentrer collimaté, divergents et convergents les rayons de lumière (7), afin de éclairer ledit objet de décoration (5).

2. Un dispositif de lampe affichage selon la revendication 1, **caractérisé par** interne reflétant la convergence de guidage de lumière un système de collecte (2) à éclairer motifs, figurines, des oeuvres d'art et hologrammes (6),

3. Un dispositif de lampe affichage selon la revendication 1, **caractérisée par** conique ou pyramidale effilée guides de lumière.

4. Un dispositif de lampe affichage selon la revendication 1, **caractérisée par** oblongues ou pignon en forme comme la convergence des guides de lumière.

5. Un dispositif d'affichage mobiles lampe selon l'une quelconque des revendications précédentes, **caractérisé par** mouvement dans un milieu liquide lorsqu'il est soumis aux variations de pression, la température fluctuations ou influencés par les forces actuelles.

6. Un dispositif de lampe affichage selon l'une quelconque des revendications précédentes **caractérisé par** caverneux ou des guides de lumière solide.

7. Un dispositif de lampe affichage selon l'une quelconque des revendications précédentes, **caractérisée par** deux surfaces de façon réflexive (2).

8. Un dispositif de lampe affichage selon l'une quelconque des revendications précédentes, **caractérisé par** surfaces miroir concave (2) face de l'autre, en joignant une lumière placée au centre source, afin de guider la lumière à la convergence des ouvertures circonférentielles (4) objets décoratifs de logement (5).

9. Un dispositif de lampe affichage selon l'une quelconque des revendications précédentes,**caractérisé par** lentilles, des prismes réflecteurs et (5) introduit dans l'ouverture (4).

10. Un dispositif de lampe affichage selon l'une quelconque des revendications précédentes, **caractérisé par** matériaux phosphorescents.

11. Un dispositif de lampe affichage selon l'une quelconque des revendications précédentes, **caractérisé en ce que** le rayonnement ultraviolet a la capacité de faire fluorescer le matériel enfoui dans des objets décoratifs.
